## Europäisches Patentamt
## European Patent Office
## Office européen des brevets

(19)

(11) Numéro de publication: **0 249 562 B1**

(12) **FASCICULE DE BREVET EUROPEEN**

(45) Date de publication du fascicule du brevet:
06.12.89

(51) Int. Cl.⁴: **B65B 69/00**

(21) Numéro de dépôt: **87401330.3**

(22) Date de dépôt: **12.06.87**

(54) Procédé et installation de déhoussage et de déchargement d'une paletée.

(30) Priorité: **13.06.86 FR 8608564**

(43) Date de publication de la demande:
**16.12.87 Bulletin 87/51**

(45) Mention de la délivrance du brevet:
**06.12.89 Bulletin 89/49**

(84) Etats contractants désignés:
**AT BE CH DE ES FR GB GR IT LI LU NL SE**

(56) Documents cités:
**EP-A- 0 142 846**

(73) Titulaire: **Thibault, Jacques Gabriel Auguste, 35 rue Robert Legeay, F-94000 Creteil(FR)**

(72) Inventeur: **Thibault, Jacques Gabriel Auguste, 35 rue Robert Legeay, F-94000 Creteil(FR)**

(74) Mandataire: **Tony-Durand, Serge, Cabinet Tony-Durand 77, rue Boissière, F-75116 Paris(FR)**

ACTORUM AG

## Description

La présente invention concerne le déhoussage de paletées constituées de colis maintenus en configuration compacte par une housse, et a trait à un procédé et une installation de déhoussage et de déchargement de paletées. Une installation de déhoussage de paletées comportant des moyens de coupe et des moyens d'évacuation de la housse est connue de EP-A 142 846.

L'invention s'applique notamment, mais non exclusivement, au déhoussage de paletées de bouteilles vides arrivant chez un embouteilleur en provenance d'une verrerie.

Ainsi qu'on le sait, de telles bouteilles vides sont livrées en paletées constituées de couches de bouteilles verticales adjacentes, superposées et séparées entre elles par des feuilles intercalaires par exemple en carton.

Ces paletées, aussi appelées "palettes" par abus de langage, du nom des supports sur lesquels ces paletées sont généralement constituées, ont une structure peu stable aussi a-t-on l'habitude, pour éviter la désagrégation de ces paletées pendant des phases de transport, de les enserrer dans une housse généralement constituée d'un film plastique rétractable.

Cette housse donne à ces paletées une cohésion satisfaisante pour le transport par camion ou par wagon. De plus elle a l'avantage d'assurer une protection étanche, vis-à-vis de la pluie ou de la poussière, ce qui permet de livrer dans des conditions optimales.

De façon classique, un embouteilleur qui reçoit une telle paletée commence par la déhousser avant de la dépalettiser. Cette opération de déhoussage se fait habituellement à la main et nécessite la présence d'un opérateur.

L'invention vise à rendre automatique cette opération de déhoussage, tout en permettant un déchargement plus sûr et plus fiable des paletées grâce à une imbrication des phases de déhoussage et de dépalettisation.

L'invention propose ainsi un procédé de déhoussage et de dépalettisation de paletées, formées de couches superposées de colis adjacents et confinées dans une housse de maintien, selon lequel on découpe la housse selon des plans horizontaux superposés séparant les couches de colis de manière à laisser subsister des ceintures de housse maintenant latéralement ces couches, on décharge une par une ces couches, et on coupe verticalement puis on évacue ces ceintures latérales de housse.

Ce procédé permet de conserver les ceintures de housse rétractable aussi longtemps que les colis sont manipulés par couches, d'où une sécurité optimale de manutention.

De manière préférée on coupe les ceintures latérales de housse en au moins deux endroits de sa circonférence, de manière à éviter que, lors de l'évacuation, par aspiration de préférence, des tronçons de ceinture, cette évacuation puisse induire des frottements susceptibles de faire tomber quelques colis.

Pour la mise en oeuvre de ce procédé, l'invention propose une installation de déhoussage et de déchargement (ou dépalettisation) de paletées, composées de couches superposées de colis adjacents, et confinées dans une housse de maintien, comportant :

- un dispositif de coupe horizontale de housses, adapté à découper des housses selon des plans horizontaux séparant les couches de colis, de manière à laisser subsister des ceintures de housse maintenant latéralement ces couches,
- un dispositif de manipulation adapté à décharger les paletées couche par couche, et
- un dispositif de coupe et d'évacuation de housse comportant au moins un outil de coupe pour couper une par une les ceintures de housse et des moyens d'évacuation pour évacuer ces dernières.

Selon des dispositions avantageuses de l'invention, le dispositif de coupe horizontale comporte au moins un outil horizontal de coupe et des moyens d'entraînement relatif de cet outil par rapport et autour de la paletée, verticalement et dans des plans horizontaux. Cet outil est de préférence porté au bout d'un bras lié à un chariot mobile verticalement le long d'un mât sous l'action d'un organe de commande approprié. Pour des raisons d'équilibrage des forces appliquées et de productivité, ce bras porte avantageusement deux outils de coupe décalés verticalement.

Selon un mode préféré de réalisation du dispositif de coupe horizontale, le bras portant l'outil de coupe est directement articulé, autour d'un axe vertical, sur le chariot mobile verticalement, une table tournante est prévue pour supporter chaque paletée et les moyens d'entraînement relatif comportent des moyens de commande en rotation de la table tournante et un organe d'application, tel qu'un vérin, pour appliquer l'outil de coupe contre la housse sous une pression sensiblement prédéterminée, ou le ramener en arrière.

Selon un autre mode de réalisation du dispositif de coupe horizontale, le chariot mobile verticalement comporte un cadre horizontal de guidage adapté à entourer avec jeu la paletée, le bras porte-outil est articulé sur un chariot intermédiaire coulissant sur ce cadre, les moyens d'entraînement relatif comportant des moyens de commande en coulissement du chariot intermédiaire sur le cadre et un organe d'application, tel qu'un vérin, pour appliquer l'outil de coupe contre la housse sous une pression sensiblement prédéterminée ou l'amener en retrait, le chariot intermédiaire est avantageusement lié à une chaîne coulissant sur le cadre et entraînée en mouvement par un moteur porté par le chariot mobile verticalement.

Selon une forme de réalisation préférée, l'outil de coupe est un disque, rotatif autour d'un axe vertical, muni de couteaux en saillie radiale avantageusement articulés et escamotables.

Selon une autre disposition avantageuse de l'invention, le dispositif de manipulation de couches de colis comporte de façon connue une cloche adaptée à coiffer chaque couche de colis et reliée à une source d'aspiration, comme l'enseigne par exemple la demande française de brevet 85.02657.

Selon une autre disposition avantageuse de l'invention le dispositif de coupe et d'évacuation de housse comporte au moins un outil de coupe verticale et au moins un organe d'évacuation de ceintures de housse. De préférence le dispositif de coupe et d'évacuation comporte une pluralité d'au moins deux outils de coupe verticale répartis autour de la couche de colis alternant avec des bouches d'évacuation en nombre égal reliées à une source d'aspiration. De manière préférée les outils de coupe, au nombre de deux, sont disposées de part et d'autre d'un chemin de circulation des couches, et ces bouches d'évacuation, au nombre de deux, sont portées par un cadre mobile verticalement.

Des objets, caractéristiques et avantages de l'invention ressortent de la description qui suit, donnée à titre d'exemple non limitatif, en regard des dessins annexés sur lesquels :

- la figure 1 est une vue en perspective d'un dispositif de coupe horizontale de housse faisant partie d'une installation de déhoussage et de dépalettisation conforme à l'invention,
- la figure 2 est une vue en perspective d'un autre dispositif de coupe horizontale de housse,
- la figure 3 est une vue en perspective d'un dispositif de manutention et d'un dispositif de coupe et d'évacuation de housse faisant partie d'une installation de déhoussage et de dépalettisation conforme à l'invention,
- la figure 4 est une vue en perspective d'un outil de coupe adapté à être intégré aux dispositifs des figures 1 ou 2 selon une disposition préférée de l'invention,
- la figure 5 est une vue en coupe axiale d'un outil de coupe dans un autre mode de réalisation, et
- la figure 6 en est une vue en coupe transversale selon la ligne VI-VI de la figure 5.

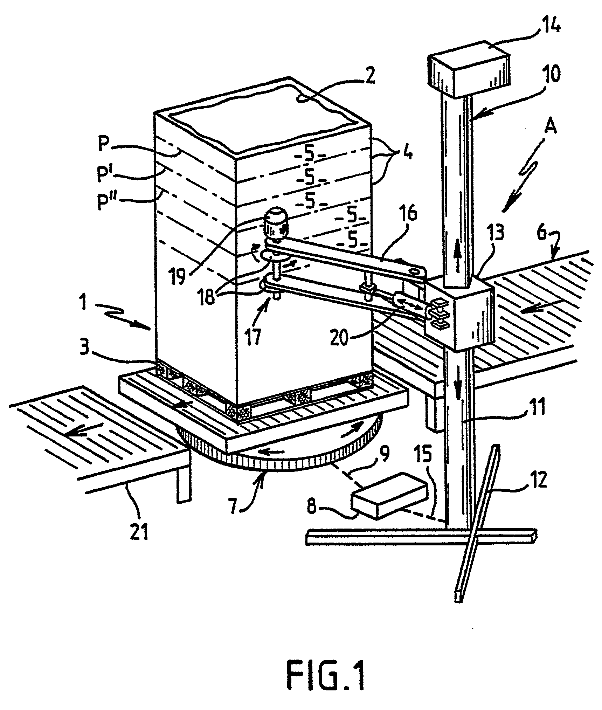

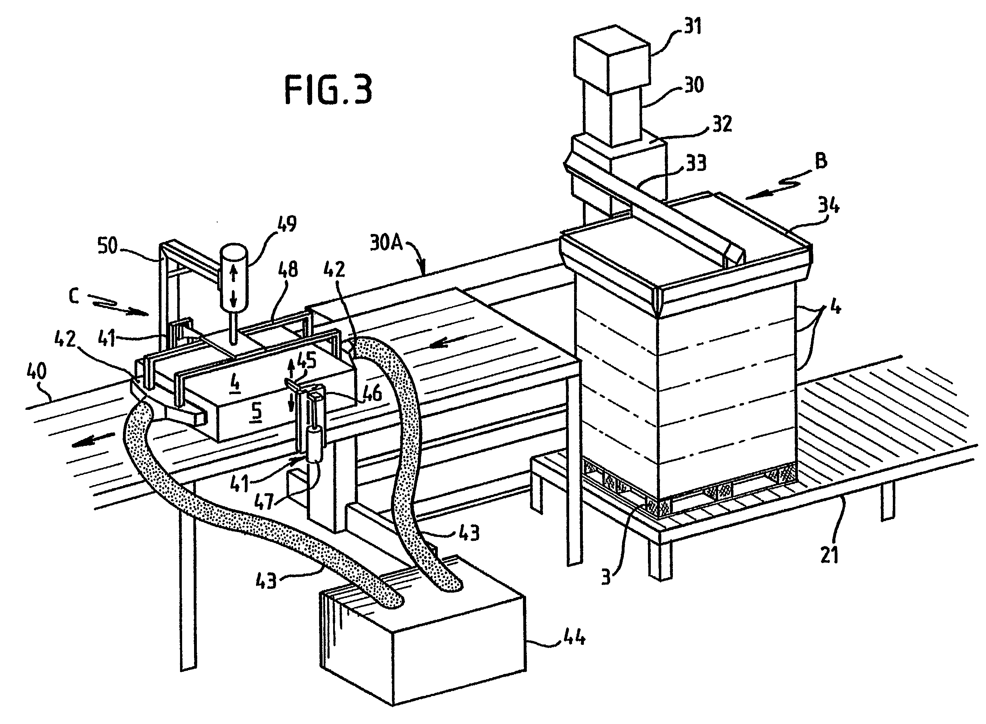

Une installation de déhoussage et de dépalettisation conforme à l'invention est représentée à titre d'exemple aux figures 1 et 3 qui illustrent des phases successives de déhoussage et de dépalettisation d'une palétée 1 recouverte d'une housse 2, généralement constituée d'un film de plastique rétractable, et supportée de préférence par une palette 3 facilitant la manutention et le chargement de la palétée par tout moyen approprié tel qu'un chariot élévateur.

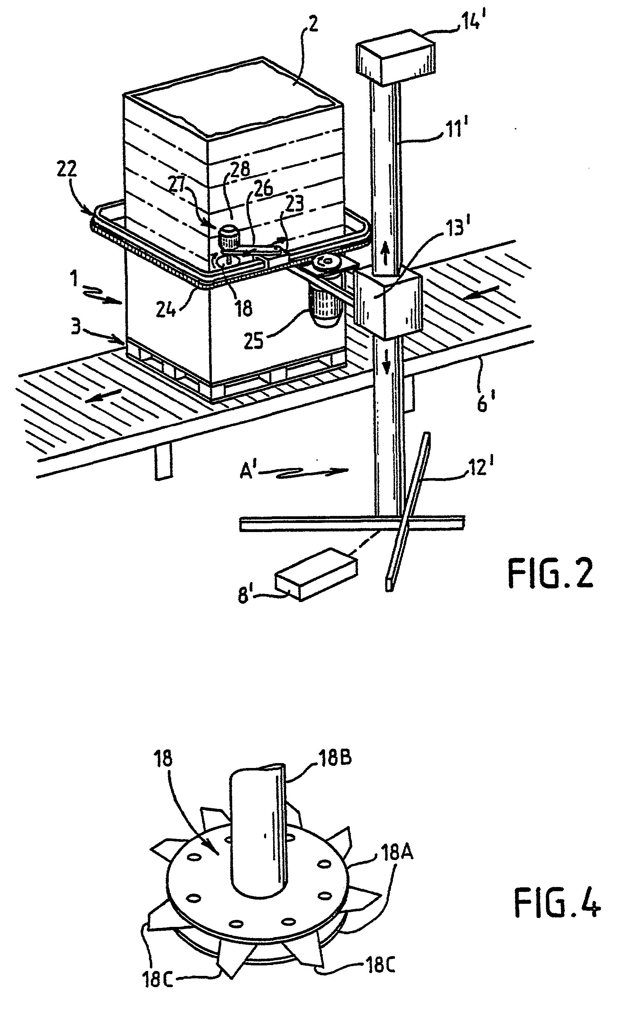

Conformément à l'invention on découpe d'abord la housse 2, en un premier poste comportant un dispositif de coupe horizontale tel que décrit aux figures 1 et 2 sous les références A ou A', selon des plans horizontaux superposés P, P', P"... séparant des couches 4 de colis (non représentés), de manière à laisser subsister des ceintures 5 de housse maintenant latéralement ces couches. On décharge ensuite une par une ces couches, par tout moyen approprié tel qu'un dispositif B représenté à la figure 3, du type décrit à la demande française de brevet 85.02657 par exemple. On coupe enfin, de façon globalement verticale, par le dispositif C de la figure 3, les ceintures 5 des couches successives et on évacue ces ceintures découpées en un ou plusieurs tronçons.

Les palétées 1 sont amenées sur un convoyeur 6 de tout type approprié connu (à rouleaux, à tapis, en bois ou caoutchouc, à chaîne ...) puis introduit, de manière connue, sur une table tournante 7 entraînée en rotation autour d'un axe vertical sous le contrôle d'un dispositif de commande schématisé en 8, et reliée à ce dernier par une ligne de liaison schématisée en 9.

A côté de cette table tournante 7 est disposé un portique de coupe 10 comportant un mât vertical 11 maintenu sur le sol par une embase 12, le long duquel se déplace verticalement un chariot 13, sous l'action d'un moteur de commande 14, agissant par exemple par l'intermédiaire d'une chaîne (non représentée) et contrôlé par ledit dispositif de commande 8 par une ligne de liaison 15.

Sur le chariot 13 est articulé, autour d'un axe vertical, un bras 16 portant à son extrémité libre un double outil de coupe 17, ici constitué de deux couteaux rotatifs 18 décalés verticalement et entraînés en rotation par un moteur 19. Le bras 16 est soumis à l'action d'un organe d'application, ici constitué d'un vérin 20 à la fois articulé au chariot 13 et au bras 16, destiné à appliquer le double outil de coupe 17 contre la housse 2 recouvrant la palétée 1 avec une pression sensiblement constante suffisante pour permettre à l'outil 17 de suivre les contours de la palétée. Ce vérin 20 est contrôlé par un organe de commande, par exemple également contrôlé par le dispositif 8 (non représenté) adapté à en commander la rétraction lors de l'introduction de la palétée sur la table 7 ainsi que pour les changements de plan de coupe.

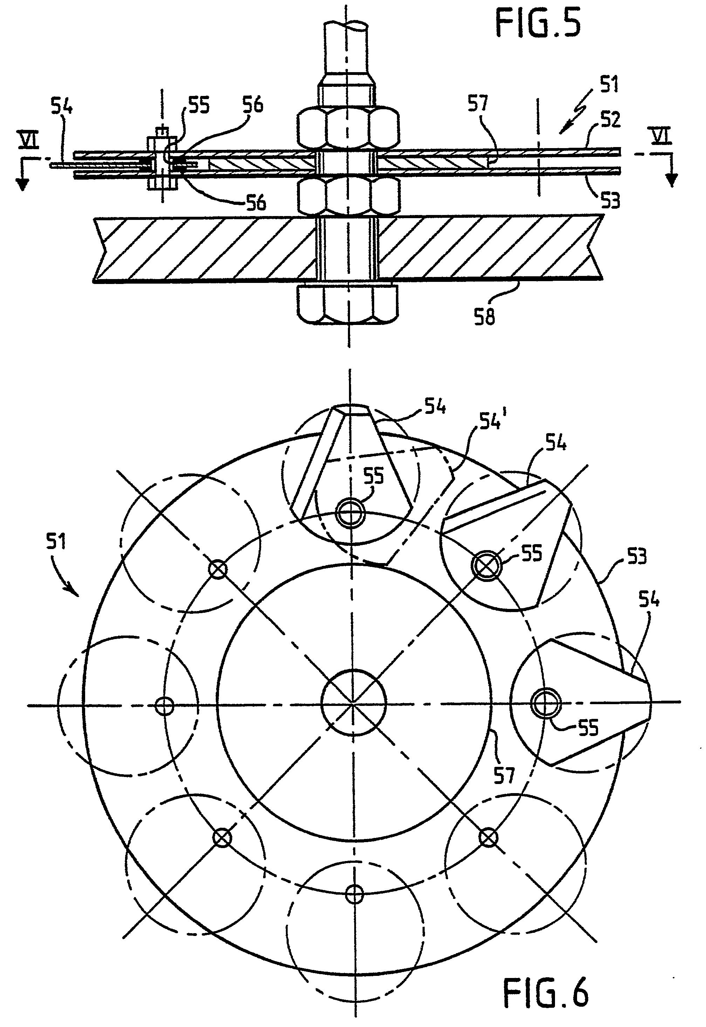

Un couteau rotatif 18 est représenté à grande échelle à la figure 4. Il comporte deux disques 18A solidaires d'un arbre 18B et entre lesquels sont enserrés des lames de couteau 18C en saillie radiale.

Les figures 5 et 6 représentent une variante de réalisation de l'outil de coupe 18 de la figure 4 désignée par la référence 51. Cet outil comporte, comme celui de la figure 4, deux flasques transversaux 52 et 53, entre lesquels sont répartis angulairement des lames de couteau 54. Ces dernières peuvent tourner librement autour d'entretoises tubulaires 55 en étant séparées des flasques 52 et 53 par des rondelles de glissement 56. Un disque d'écartement 57 forme entretoise entre les flasques.

Les lames de couteau 54 sont découpées dans des petits disques montés de façon excentrique autour des entretoises 55.

Sous ces flasques 52 et 53 est monté, de préférence avec jeu, un disque de guidage 8, de diamètre sensiblement égal à celui des flasques, destiné à suivre le contour d'un colis à déhousser.

Lorsque l'outil de coupe 51 est entraîné en rotation autour de son axe vertical les lames de couteau viennent radialement en saillie par effet centrifuge mais, en cas de rencontre avec des éléments durs, ces lames de couteau peuvent s'escamoter entre les flasques 52 et 53, par rotation autour des doigts 55 associés ; une telle configuration escamotée est représentée en traits mixtes 54' à la partie haute de la figur 6. Seules trois lames de couteau sont représentées sur cette figure 6, dans le quart supérieur droit.

En variante non représentée l'outil de coupe peut être aussi constitué, par exemple, par un laser, une flamme, un couteau fixe et autres outils appropriés connus.

Dans une version de base de l'invention, les positions verticales du chariot 13 le long du mât 11 sont préprogrammées dans le dispositif de commande 8 : on travaille en aveugle. Dans une version plus sophistiquée des capteurs sont prévus pour détecter la position verticale du sommet de la paletée et/ou des intercalaires séparant les couches.

Tel que représenté à la figure 1 le dispositif de coupe horizontale A découpe la housse 2 de haut en bas. Le nombre d'outils de coupe décalés verticalement et adaptés à travailler simultanément définit bien entendu le nombre total de cycles de coupe (à chaque cycle correspondant une position verticale du chariot 13).

A la fin de cette phase de découpe horizontale la paletée est évacuée, de manière connue, sur un convoyeur intermédiaire 21, par exemple similaire au convoyeur 6.

On notera que le dispositif de commande schématisé en 8 commande l'entraînement relatif de l'outil de coupe par rapport à la paletée.

Dans la variante de réalisation représentée à la figure 2, le dispositif de découpe horizontale A' se limite à un portique situé à côté d'un convoyeur 6'. Ce dispositif comporte comme dans le cas de la figure 1, un mât 11' stabilisé au sol par une embase 12', sur lequel se déplace verticalement un chariot 13', sous l'action d'un moteur de commande 14', par exemple contrôlé par un dispositif de commande schématisé en 8'.

Le chariot 13' porte ici un cadre 22 adapté à entourer avec jeu la paletée 1, sur lequel peut coulisser un chariot intermédiaire schématisé en 23, entraîné le long de ce cadre par une chaîne 24, coopérant avec un moteur 25, porté par le chariot 13' et par exemple contrôlé par le dispositif 8'.

Le chariot intermédiaire 23 porte, de façon similaire au chariot 13 de la figure 1, un bras 26 portant à une extrémité un outil de coupe 27, ici un couteau rotatif 18 du type représenté à la figure 4, entraîné par un moteur 28. Un organe d'application (non représenté pour des raisons de lisibilité du dessin), par exemple analogue au vérin 20 de la figure 1, permet le retrait du couteau 18 vis-à-vis de la paletée 1 ou au contraire son application sous pression contre la housse 2.

Après découpe en bande par le dispositif A de la figure 1 (mais cela est également applicable au dispositif A' de la figure 2) la paletée est amenée par le convoyeur intermédiaire 21 sous un dispositif B de manutention de couches de colis.

Ce dispositif est par exemple du type décrit à la demande de brevet précité. Il comporte un mât vertical 30, mobile horizontalement sur un bâti 30A, sur lequel se déplace, sous l'action d'un moteur 31, un chariot 32 muni d'un bras 33 portant une cloche 34 venant coiffer une par une les couches 4 de colis. L'intérieur de cette cloche est relié à une source d'aspiration continue (non représentée).

La sécurité de la manutention des couches 4 de colis est nettement améliorée par la présence de la ceinture de housse 5.

Ce dispositif B dépose successivement les couches de colis sur un convoyeur d'évacuation 40 tandis que les palettes 3 sont évacuées, lorsqu'elles sont vides, par tout moyen approprié.

Les couches individuelles de colis sont amenées successivement auprès du dispositif C de coupe et d'évacuation.

Ce dispositif comporte, autour de la position normale d'une couche, deux outils de coupe verticale 41 disposés sur les côtés du convoyeur 40, alternant avec deux bouches d'évacuation 42 reliées par des canalisations souples 43 à un bac de récupération de housses 44 muni d'une source d'aspiration.

Les outils de coupe 41 comportent ici un doigt de découpe 45 de tout type approprié, par exemple du type laser, à flamme ... porté par un coulisseau mobile verticalement sur des glissières 46 sous l'action d'un organe de commande 47 ici constitué d'un vérin dont le cylindre est solidaire des glissières. Cet organe de commande est contrôlé par un dispositif de commande non représenté de tout type connu.

Quant aux bouches d'évacuation 42, qui viennent se placer de part et d'autre des couches 4 de colis dans leur sens de déplacement, elles sont portées par un cadre ou structure 48 mobile en translation verticale sur une amplitude au moins égale à la hauteur des couches, sous l'action d'un organe 49 de commande en translation porté par un portique fixe 50.

Selon une variante non représentée ce sont les doigts de découpe qui sont portés par un cadre mobile en translation verticale tandis que les bouches d'évacuation sont disposées de part et d'autre du convoyeur 40.

Il va de soi que la description qui précède n'a été proposée qu'à titre d'exemple non limitatif et que de nombreuses variantes peuvent être proposées par l'homme de l'art sans sortir du cadre de l'invention.

**Revendications**

1. Procédé de déhoussage et de déchargement, de paletées formées de couches superposées (4) de colis adjacents et confinées dans une housse de maintien (2), selon lequel on découpe (A, A') la housse (2) selon des plans horizontaux (P, P'...) séparant les couches de colis de manière à laisser subsister des ceintures de house (5) maintenant latéralement ces couches, on décharge (B) une par une ces couches, et on coupe verticalement puis on évacue (C) ces ceintures de housse.

2. Procédé selon la revendication 1, caractérisé en ce que l'on coupe les ceintures latérales de housse en au moins deux endroits entre lesquels on évacue par aspiration les tronçons de ceinture ainsi découpés.

3. Installation de déhoussage et de déchargement, de paletées (1) composées de couches superposées (4) de colis adjacents et confinées dans une housse de maintien (2), comportant, en combinaison, le long d'une série de convoyeurs :

- un dispositif (A, A') de coupe horizontale de housses, adapté à découper des housses selon des plans hotizontaux (P, P', P" ...) séparant les couches de colis, de manière à laisser subsister des ceintures (5) de housse maintenant latéralement ces couches,
- un dispositif (B) de manipulation de colis couches par couches, et
- un dispositif (C) de coupe et d'évacuation de housse, comportant au moins un outil de coupe (41) pour couper une par une les ceintures, et des moyens d'évacuation (42-44) pour évacuer les tronçons de ceinture ainsi découpés.

4. Installation selon la revendication 3, caractérisée en ce que le dispositif de coupe horizontale (A, A') comporte au moins un outil horizontal de coupe (17, 27) et des moyens (7-9, 14, 20 ; 8', 14', 25) d'entraînement relatif de cet outil par rapport à la palétée (1).

5. Installation selon la revendication 4, caractérisée en ce que l'outil de coupe (17, 27) est porté au bout d'un bras (16, 26) lié à un chariot (13, 13') commandé en translation le long d'un mât vertical (11, 11').

6. Installation selon la revendication 5, caractérisée en ce que l'outil de coupe (17) comporte deux couteaux rotatifs (18, 51).

7. Installation selon l'une quelconque des revendications 4 à 6, caractérisée en ce que l'outil de coupe (17) comporte deux flasques rotatifs (52, 53) entre lesquels sont articulées des lames de couteau escamotables (54).

8. Installation selon la revendication 5, caractérisée en ce que le bras (16) est directement articulé autour d'un axe vertical sur le chariot (13) mobile verticalement, une table tournante (7) est prévue pour supporter la palétée, et les moyens d'entraînement relatif comportent des moyens (8, 9) de commande en rotation de la table (7) et un organe d'application (20) pour appliquer avec pression l'outil de coupe contre la housse (2) ou l'amener en retrait.

9. Installation selon la revendication 5, caractérisée en ce que le chariot (13') mobile verticalement comporte un cadre horizontal de quidage (22) adapté à entourer avec jeu la palétée, le bras (27) est articulé sur un chariot intermédiaire (23) coulissant sur ce cadre, et les moyens (8', 25) d'entraînement relatif comportent des moyens (24, 25) de commande en coulissement du chariot intermédiaire (23) sur le cadre et un organe d'application pour appliquer avec pression l'outil de coupe contre la housse, ou l'amener en retrait.

10. Installation selon la revendication 9, caractérisée en ce que le chariot intermédiaire (23) est lié à une chaîne (24) coulissant sur le cadre (22) et coopérant avec un moteur (25) porté par le chariot mobile verticalement.

11. Installation selon l'une quelconque des revendications 3 à 10, caractérisée en ce que le dispositif (B) de manipulation de colis couches par couches comporte un mât vertical (30) mobile horizontalement sur un bâti (30A), sur lequel est commandé en translation verticale un chariot (32) muni d'un bras (33) portant une cloche d'aspiration (34).

12. Installation selon l'une quelconque des revendications 3 à 11, caractérisée en ce que le dispositif (C) de coupe et d'évacuation de housse comporte au moins un outil de coupe verticale (41) et au moins un organe (42) d'évacuation de ceintures de housse.

13. Installation selon la revendication 12, caractérisée en ce que le dispositif (C) de coupe et d'évacuation de ceintures et de housse comporte une pluralité d'au moins deux outils de coupe verticale (41) répartis autour d'une couche de colis alternant avec une pluralité de bouches latérales d'évacuation (42) en nombre égal reliées à une source d'aspiration (44).

14. Installation selon la revendication 13, caractérisée en ce que les outils de coupe (41), au nombre de deux, sont disposés de part et d'autre d'un convoyeur (40) de circulation des couches de colis, et les bouche d'aspiration (42), également au nombre de deux, sont portées par une structure (48) mobile verticalement.

15. Installation selon la revendication 14, caractérisée en ce que les outils de coupe (41) comportent un doigt de découpe (45) porté par un coulisseau mobile entre des glissières (46) sous l'action d'un vérin de commande (47).

**Claims**

1. Method for hood removal and unloading of pallet-loads formed of superposed layers (4) of adjacent packages confined within a maintaining hood (2), in which the hood (2) is cut (A, A') along horizontal planes (P, P' ...) which separate the layers of packages so as to leave hood bands (5) which maintain these layers laterally, these layers are unloaded (B) one by one, and these hood bands are cut vertically, then removed (C).

2. Method in accordance with claim 1, characterized in that the lateral hood bands are cut in at least two places between which the band segments thus cut are removed by suction.

3. Installation for hood removal and unloading of pallet-loads (1) composed of superposed layers (4) of adjacent packages confined within a maintaining hood (2), comprising in combination along a series of conveyors:
- a device (A, A') for horizontal cutting of hoods, adapted to cut hoods along horizontal planes (P, P', P"...) which separate the layers of packages so as to leave hood bands (5) which maintain these layers laterally,
- a device (B) for handling packages in successive layers, and
- a device (C) for cutting and removing hoods, comprising at least one cutting tool (41, for cutting the bands one by one, and removal means (42–44) for removing the band segments which have thus been cut.

4. Installation in accordance with claim 3, characterized in that the horizontal cutting device (A, A') comprises at least one horizontal cutting tool (17, 27) and means (7–9, 14, 20 ; 8', 14', 25) for producing a relative displacement of this tool with respect to the pallet-load (1).

5. Installation in accordance with claim 4, characterized in that the cutting tool (17, 27) is carried at the end of an arm (16, 26) connected to a carriage (13, 13') driven in translation along a vertical mast (11, 11').

6. Installation in accordance with claim 5, characterized in that the cutting tool (17) has two rotary knives (18, 51).

7. Installation in accordance with any one of claims 4 to 6, characterized in that the cutting tool (17) has two rotary side-plates (52, 53) between which are articulated retractable knife-blades (54).

8. Installation in accordance with claim 5, characterized in that the arm (16) is directly articulated about a vertical axis on the vertically movable carriage (13), a rotary table (7) is provided for supporting the pallet-load, and the means for producing a relative displacement comprise means (8, 9) for driving the table (7) in rotation and an application member (20) for applying the cutting tool against the hood (2) with pressure or for moving it to a position of withdrawal.

9. Installation in accordance with claim 5, characterized in that the vertically movable carriage (13') comprises a horizontal guiding frame (22) adapted to surround the pallet-load with play, the arm (27) is pivotally mounted on an intermediate carriage (23) slidably mounted on said frame, and the means (8', 25) for producing a relative displacement comprise means (24, 25) for displacing the intermediate carriage (23) on the frame in sliding motion and an application member for applying the cutting tool against the hood with pressure or for moving it to a position of withdrawal.

10. Installation in accordance with claim 9, characterized in that the intermediate carriage (23) is connected to a chain (24) which slides on the frame (22) and cooperates with a motor (25) carried by the vertically movable carriage.

11. Installation in accordance with any one of claims 3 to 10, characterized in that the device (B) for handling packages in successive layers comprises a vertical mast (30) which is capable of moving horizontally on a frame (30A), a carriage (32) being driven in vertical translational motion on said frame and provided with an arm (33) which carries a suction bell (34).

12. Installation in accordance with any one of claims 3 to 11, characterized in that the hoodcutting and removing device (C) comprises at least one vertical cutting tool (41) and at least one member (42) for removing hood bands.

13. Installation in accordance with claim 12, characterized in that the hood-band and hood cutting and removal device (C) comprises a plurality of at least two vertical cutting tools (41) distributed about a layer of packages alternating with a plurality of lateral discharge outlets (42) in equal number and connected to a suction source (44).

14. Installation in accordance with claim 13, characterized in that the cutting tools (41) which are two in number are placed on each side of a conveyor (40) for circulating layers of packages, and the suction inlets (42) which are also two in number are carried by a vertically movable structure (48).

15. Installation in accordance with claim 14, characterized in that the cutting tools (41) comprise a cutting lug (45) carried by a slide-block which is capable of moving between guides (46) under the action of a control jack (47).

## Patentansprüche

1. Verfahren zur Enthaubung und Entladung von Paletten mit übereinandergestapelten Lagen (4) aus benachbarten und aneinandergrenzenden Packstücken unter einer Haube (2), indem die Haube (2) in horizontalen Ebenen (P, P', ...) unter Trennung der Lagen der Packstücke so geschnitten (A, A') wird, daß ringartige Haubenabschnitte (5) entstehen, die die Schichten seitlich umgeben, die Lagen einzeln nacheinander entladen (B) werden und die Haubenabschnitte nach einem vertikalen Schnitt entfernt (C) werden.

2. Verfahren nach Anspruch 1, dadurch gekennzeichnet, daß die ringförmigen Haubenabschnitte mindestens an zwei Stellen aufgeschnitten und die so geschnittenen Teile durch Absaugen entfernt werden.

3. Anlage zur Enthaubung und Entladung von Paletten (1) mit übereinandergestapelten Lagen (4) aus benachbarten und aneinandergrenzenden Packstücken unter einer Haube (2), mit einer Reihe von zueinandergehörigen Förderern:
   – Es ist eine Vorrichtung (A, A') zum horizontalen Schneiden der Hauben vorgesehen, die die Hauben in horizontalen Ebenen (P, P', P'') unter Trennung der Lagen der Packstücke so schneidet, daß ringartige Haubenabschnitte (5) entstehen, die die Schichten seitlich umgeben.
   – Es ist eine Vorrichtung (B) zum schichtenweisen Umsetzen der Packstücke vorgesehen.
   – Es ist eine Vorrichtung (C) zum Schneiden und Entfernen der Haube vorgesehen, die mindestens ein Schneidwerkzeug zum einzelnen Aufschneiden der ringförmigen Haubenabschnitte und Mittel (42 bis 44) zum Entfernen der so geschnittenen Teile der Haubenabschnitte aufweist.

4. Anlage nach Anspruch 3, dadurch gekennzeichnet, daß die Vorrichtung zum horizontalen Schneiden (A, A') mindestens ein horizontales Schneidwerkzeug (17, 27) und Mittel (7 bis 9, 14, 20; 8', 14', 25) zum Führen des Schneidwerkzeugs relativ zu der Palette (1) aufweist.

5. Anlage nach Anspruch 4, dadurch gekennzeichnet, daß das Schneidwerkzeug (17, 27) am Ende eines Arms (16, 26) angeordnet ist, der mit einem Schlitten (13, 13') verbunden ist, dessen Translationsbewegungen von einer vertikalen Säule (11, 11') abgeleitet ist.

6. Anlage nach Anspruch 5, dadurch gekennzeichnet, daß das Schneidwerkzeug (17) zwei rotierende Schneidmesser (18, 51) aufweist.

7. Anlage nach einem der Ansprüche 4 bis 6, dadurch gekennzeichnet, daß das Schneidwerkzeug (17) zwei rotierende Flansche 52, 53) aufweist, zwischen denen versenkbare Schneidmesser (54) gelenkig aufgehängt sind.

8. Anlage nach Anspruch 5, dadurch gekennzeichnet, daß der Arm (16) unmittelbar um eine vertikale Achse auf dem vertikal bewegbaren Schlitten (13) schwenkbar angeordnet sind, daß ein Drehtisch (7) zur Aufnahme der Palette vorgesehen ist, und daß die Mittel zum relativen Führen (8, 9) zur Steuerung des Drehtischs und ein Druckorgan (20) zum Anlegen des Schneidwerkzeugs unter Druck gegen die Haube (2) und zum Zurückziehen aufweisen.

9. Anlage nach Anspruch 5, dadurch gekennzeichnet, daß der vertikal bewegbare Schlitten (13') einen horizontalen Führungsrahmen (22) aufweist, der die Palette mit Spiel umgibt, daß der Arm (27) gelenkig auf einem auf dem Führungsrahmen gleitenden Zwischenstück (23) angeordnet ist, und daß ein Mittel zum relativen Führen (8', 25) Mittel (24, 25) zum Steuern des Gleitens des Zwischenstücks (23) auf dem Führungsrahmen und ein Druckorgan zum Anlegen des Schneidwerkzeugs unter Druck gegen die Haube und zum Zurückziehen aufweisen.

10. Anlage nach Anspruch 9, dadurch gekennzeichnet, daß das Zwischenstück (23) mit einer Kette (24), die auf dem Führungsrahmen (22) gleitet, verbunden ist und mit einem Motor (25) zusammenarbeitet, der von dem vertikal beweglichen Schlitten getragen ist.

11. Anlage nach einem der Ansprüche 3 bis 10, dadurch gekennzeichnet, daß die Vorrichtung (B) zum schichtenweisen Umsetzen der Packstücke eine vertikale Säule (30) aufweist, die horizontal auf einem Rahmen (30A) beweglich ist, auf dem vertikal beweglich ein Schlitten (32) angeordnet ist, der mit einem Arm (33) ausgestattet ist, der eine Saugglocke trägt.

12. Anlage nach einem der Ansprüche 3 bis 11, dadurch gekennzeichnet, daß die Vorrichtung (C) zum Schneiden und Entfernen der Haube mindestens ein Werkzeug zum vertikalen Schneiden (41) und mindestens ein Organ (42) zum Entfernen der ringförmigen Haubenabschnitte aufweist.

13. Anlage nach Anspruch 12, dadurch gekennzeichnet, daß die Vorrichtung (C) zum Schneiden und Entfernen der Haubenabschnitte und der Haube mindestens zwei Werkzeuge für den Vertikalschnitt (41) aufweist, die um eine Lage der Packstücke herum mit seitlichen Saugöffnungen (42) beliebiger Anzahl abwechselnd angeordnet sind, die mit einer Saugquelle (44) verbunden sind.

14. Anlage nach Anspruch 13, dadurch gekennzeichnet, daß zwei Werkzeuge für den Vertikalschnitt (41) vorgesehen sind, die an einem Förderer (40) für den Transport der Lagen der Packstücke einander gegenüber angeordnet sind, und daß zwei Saugöffnungen (42) vorgesehen sind, die von einem vertikal beweglichen Element (48) getragen sind.

15. Anlage nach Anspruch 14, dadurch gekennzeichnet, daß die Werkzeuge für den Vertikalschnitt (41) einen Schneidfinger (45) aufweisen, der in einer beweglichen Kulisse zwischen Führungsstücken (46) von einem Steuerzylinder (47) getragen ist.

FIG.1

EP 0 249 562 B1

FIG.2

FIG.4

FIG.3

EP 0 249 562 B1

FIG.5

54    55    56    57    51
52
VI                    VI
53

56
58

54    54'    54
55
51        55        53
54
57    55

FIG.6